# EUROPÄISCHE PATENTANMELDUNG

(11) **EP 4 683 172 A1**
(43) Veröffentlichungstag der Anmeldung: **21.01.2026**
(21) Anmeldenummer: 24189006.0
(22) Anmeldetag: 16.07.2024
(51) Int. Cl.: H02K 1/14, H02K 15/025

(54) **DRUCKFINGER FÜR BLECHPAKET**

(71) Anmelder: Flender GmbH, 46395 Bocholt (DE)
(72) Erfinder: Memminger, Oliver, 46395 Bocholt (DE); Friedl, Klaus, 46395 Bocholt (DE); Roth, Christian, 46395 Bocholt (DE)
(74) Vertreter: Michalski Hüttermann & Partner Patentanwälte mbB

(57) **Zusammenfassung**

Blechpaket 10 für einen um eine Mittelachse A_{M} angeordneten Stator 12 oder einen um die Mittelachse A_{M} drehbaren Rotorläufer einer elektrischen Maschine, wobei mehrere zu Teilpaketen 16 zusammengesetzte Einzelbleche 14 vorgesehen sind und jedes Einzelblech 14 zur Bildung eines Schrägungswinkels α_{S} des Blechpakets 10 zu dem jeweils in einer axialen Richtung der Mittelachse A_{M} benachbarten Einzelblech 14 einen umfänglichen Versatz aufweist und die Teilpakete 16 unter Bildung eines in der axialen Richtung sich ausdehnenden Axialspalts 18 zueinander ausgerichtet sind und wobei zwischen Teilpaketen 16 umfänglich mehrere Druckfinger 20 einsitzen. Der Druckfinger weist einen Radialabschnitt 22 und einen Steckzapfen 24 aus, wobei Radialabschnitt 22 und Steckzapfen 24 in der Größenordnung des Schrägungswinkels α_{S} winklig zueinander angestellt sind. Es ist eine saubere, plane Auflage des Druckfingers 20 an dem jeweiligen Blechpaket 10 bzw. Einzelpaket 20 gewährleistet.

## Beschreibung

Die Erfindung betrifft ein Blechpaket für einen um eine Mittelachse A_{M} angeordneten Stator oder einen um die Mittelachse A_{M} drehbaren Rotorläufer einer elektrischen Maschine, wobei mehrere zu Teilpaketen zusammengesetzte Einzelbleche vorgesehen sind und jedes Einzelblech zur Bildung eines Schrägungswinkels des Blechpakets zu dem jeweils in einer axialen Richtung der Mittelachse A_{M} benachbarten Einzelblech einen umfänglichen Versatz aufweist und die Teilpakete unter Bildung eines in der axialen Richtung sich ausdehnenden Axialspalts zueinander ausgerichtet sind und wobei zwischen Teilpaketen umfänglich mehrere Druckfinger einsitzen, die einen in einer radialen Richtung der Mittelachse A_{M} verlaufenden Radialabschnitt und einen in der axialen Richtung gerichteten und in einer von den Einzelblechen ausgebildeten Stecknut einsitzenden Steckzapfen aufweisen.

Eine elektrische Maschine, wie z.B. ein elektrischer Motor, ein Generator oder ein Transformator, weisen ein aus Einzelblechen zusammengesetztes Blechpaket im Stator und/oder im Rotorläufer auf. In einem Blechpaket werden Druckfinger verwendet, um zwischen Teilpakete des Blechpakets Axialspalte zu erzeugen, die als Luftschlitze dienen, um Luft zur Kühlung durchleiten zu können. Die Druckfinger dienen somit als Abstandshalter zwischen den Teilpaketen. Hierzu werden Steckzapfen der Druckfinger bei der Montage in passgenaue Stecknuten der Einzelbleche gesetzt und zwar zur einen axialen Seite des Axialspalts hin, während zur anderen axialen Seite des Axialspalts die Druckfinger lediglich an der Oberfläche des jeweiligen Teilblechpakets anliegen.

Die Stecknuten ergeben sich daraus, dass sich Ausstanzungen der Einzelbleche in axialer Richtung zu nutartigen Vertiefungen zusammensetzen. Da die Einzelbleche zur Bildung eines Schrägungswinkels des Blechpakets zu dem jeweils in einer axialen Richtung der Mittelachse A_{M} benachbarten Einzelblech einen umfänglichen Versatz bzw. Verdrehwinkel aufweisen, stehen die Stecknuten nicht senkrecht zu der jeweiligen Oberfläche der Einzelbleche, sondern eine Achse der Stecknut steht unter einem gewissen von 90° abweichenden Winkel zu der Blechoberfläche. Durch die geringe Toleranz, mit der der Steckzapfen jedes Druckfingers in der Stecknut einsitzt, liegen die Druckfinger zu den axialen Seiten des Axialspalts nicht plan bzw. flächig an der Oberfläche des jeweiligen Teilblechpakets an, sondern unter einer gewissen Schrägstellung. Herkömmlich wird der Schrägungswinkel maßgeblich dadurch erreicht, dass die Druckfinger mit einem Einsteckspiel in den Stecknuten einsitzen und eine begrenzte Relativbewegung ausführen können. Zudem unterliegt auch noch der Druckfinger an sich infolge des Stanzvorgang bei seiner Herstellung einer gewissen Winkelabweichung. Diese Effekte können dann wiederum während des Pressvorgangs des Blechpakets zu einer Fehlausrichtung und plastischen Verformung der Druckfinger führen. Im späteren Betrieb des Blechpaktes - z.B. in einem Stator oder einem Rotorläufer einer elektrischen Maschine - können sich die Druckfinger dann lockern, da die Flächenpressung an der plastisch verformten Fläche sehr hoch ist und eine weitere Verformung die Folge sein kann. Es besteht demnach ein Bedürfnis, den Sitz der Druckfinger gegenüber den jeweiligen der Anlage dienenden Einzelbleche zu verbessern.

Es ist die Aufgabe der Erfindung Maßnahmen aufzuzeigen, den Sitz der Druckfinger gegenüber Einzelblechen des Blechpakets zu verbessern.

Die Lösung der Aufgabe erfolgt durch ein Blechpaket für einen um eine Mittelachse A_{M} angeordneten Stator oder einen um die Mittelachse A_{M} drehbaren Rotorläufer mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Blechpaket für einen um eine Mittelachse A_{M} angeordneten Stator oder einen um die Mittelachse A_{M} drehbaren Rotorläufer einer elektrischen Maschine, wobei mehrere zu Teilpaketen zusammengesetzte Einzelbleche vorgesehen sind und jedes Einzelblech zur Bildung eines Schrägungswinkels des Blechpakets zu dem jeweils in einer axialen Richtung der Mittelachse A_{M} benachbarten Einzelblech einen umfänglichen Versatz aufweist und die Teilpakete unter Bildung eines in der axialen Richtung sich ausdehnenden Axialspalts zueinander ausgerichtet sind und wobei zwischen Teilpaketen umfänglich mehrere Druckfinger einsitzen, die einen in einer radialen Richtung der Mittelachse A_{M} verlaufenden Radialabschnitt und einen in der axialen Richtung gerichteten und in einer von den Einzelblechen ausgebildeten Stecknut einsitzenden Steckzapfen aufweisen. Der Steckzapfen ist gegenüber dem Radialabschnitt um eine durch die radiale Richtung beschriebene Achse abgewinkelt.

Bei dem hiermit beschriebenen Blechpaket ist es möglich, den bei einem größeren Schrägungswinkel des Blechpakets von 90° abweichenden Winkel der Achse der Stecknut zu der Ebene der Blechoberfläche durch einen zwischen Radialabschnitt und Steckzapfen abgewinkelten Druckfinger auszugleichen. Die abgewinkelten Druckfinger erlauben eine saubere Ausrichtung innerhalb der Axialspalte und eine flächige Anlage an der Oberfläche der Einzelbleche. Durch die abgewinkelten Druckfinger kann man engere Toleranzen der Stecknuten realisieren, da der Schrägungswinkel des Blechpaktes nicht komplett durch das Spiel der Druckfinger in den Stecknuten abgebildet werden muss. Dadurch erlaubt man auch eine genauere rotatorische Ausrichtung der Druckfinger in der Blechebene und konstantere Abstände der Axialspalte. Eine saubere Auflage des Druckfingers auf der Blechoberfläche unter 90° kann realisiert werden und insbesondere eine mögliche plastische Verformung während des Betriebs des Blechpakets wird vermieden. Somit ist ein Lockern oder Lösen der Druckfinger zumindest weitestgehend unterbunden. Dies wiederum bietet eine gestiegene Sicherheit gegen ein Verdrehen des Blechpakets, da durch Fehlausrichtung entstehende Torsionslasten zumindest deutlich reduziert sind. Von Vorteil ist zudem, dass ein Prägevorgang zur Herstellung lediglich dahingehend angepasst werden muss, dass er zusätzlich die Abwinkelung zwischen dem Radialabschnitt und dem Steckzapfen mitprägt. Eine weitere Änderung des Prägevorgangs ist nicht erforderlich. Allerdings ist es auch möglich die Abwinkelung zwischen dem Radialabschnitt und dem Steckzapfen auch ohne weitere Prägung in einem Stanzprozess zu integrieren.

In einer möglichen Ausgestaltung ist der Steckzapfen gegenüber dem Radialabschnitt um ein Maß abgewinkelt, das in seiner Größenordnung dem Maß des Schrägungswinkels entspricht. Hierdurch ist gewährleistet, dass der durch den Schrägungswinkel entstehende und von 90° abweichenden Winkel der Achse der Stecknut zu der Ebene der Blechoberfläche zumindest weitestgehend ausgeglichen und die Druckfinger sauber an der jeweiligen Blechoberfläche anliegen.

In einer weiteren bevorzugten Ausgestaltung weicht das Maß, um das der Steckzapfen gegenüber dem Radialabschnitt abgewinkelt ist, um +/- 0,2° von dem Maß des Schrägungswinkels ab. Um in vorteilhafter Weise über die durch die Abwinkelung der Druckfinger erzeugte Anpassung der Druckfinger an den Schrägungswinkel des Blechpakets zu erzielen, sitzen die Steckzapfen mit einem Einsteckspiel, das eine definierte umfängliche Bewegung des Druckfingers gegenüber dem jeweiligen Einzelblech ermöglicht, in der Stecknut ein. Dieses Einsteckspiel ist zweckmäßiger derart ausgelegt, dass die dadurch erzielte Beweglichkeit es den Druckfingern erlaubt, sich in einer Größenordnung von bis zu 0,05° zu verkippen. Das Einsteckspiel ist gegenüber der herkömmlichen Ausführung deutlich verkleinert, so dass sich nunmehr die Druckfinger nur noch in geringem Maße in der Blechebene um die Stecknuten verdrehen können und Kollisionen mit benachbarten Druckfingern vermieden werden.

In einer bevorzugten konkreten Ausgestaltung der Druckfinger kann vorgesehen sein, dass der Steckzapfen gegenüber dem Radialabschnitt um ein Maß zwischen 1,8° und 2,2°, bevorzugt zwischen 1,9° und 2,1°, abgewinkelt ist.

In einer weiterhin bevorzugten Ausgestaltung weist der Steckzapfen eine eingeprägte Oberflächenstruktur auf. Hierbei kann vorgesehen sein, dass sich die Oberflächenstruktur bis in den Radialabschnitt erstreckt. Die Oberflächenstruktur kann in konkreter Ausgestaltung zumindest eine auf der einen axialen Seite eingeprägte Sicke als auf der anderen Seite hervortretenden Steg aufweisen.

Die Aufgabe wird auch gelöst durch einen Stator und/oder Rotorläufer für eine elektrische Maschine, wobei Stator und/oder Rotorläufer ein Blechpaket wie beschrieben aufweist.

Zudem wird die Aufgabe gelöst durch eine elektrische Maschine, die einen Stator und/oder Rotorläufer mit einem Blechpaket wie beschrieben umfasst.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1 und 2: ein Blechpaket in perspektivischer Ansicht und in Draufsicht;
Fig. 3: einen Druckfinger für ein Blechpaket nach Fig. 1, 2 als Einzelheit;
Fig. 4: eine Darstellung von zwei benachbarten Teilpaketen eines Blechpakets mit einsitzendem Druckfinger;
Fig. 5: weitere Darstellung von zwei benachbarten Teilpaketen eines Blechpakets mit einsitzendem Druckfinger;
Fig. 6: eine mögliche Ausgestaltung eines erfindungsgemäßen Druckfingers;
Fig. 7: eine Darstellung von zwei benachbarten Teilpaketen eines Blechpakets mit einsitzendem Druckfinger nach Fig. 6 und
Fig. 8: eine ausschnittsweise Draufsicht auf ein Einzelblech mit exemplarisch eingesteckten Druckfingern.

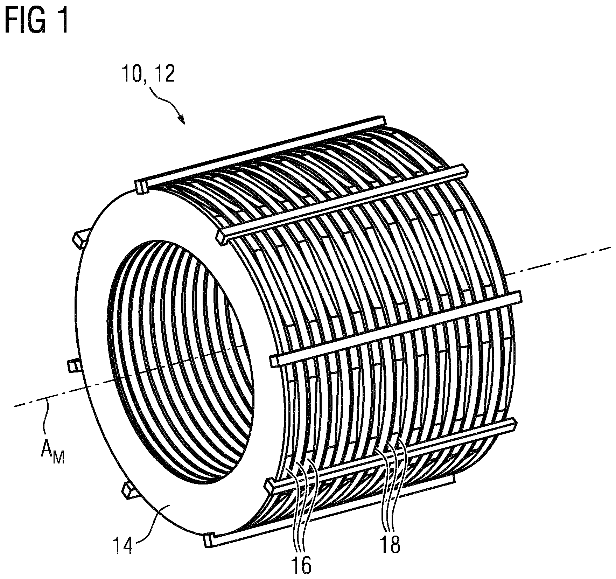

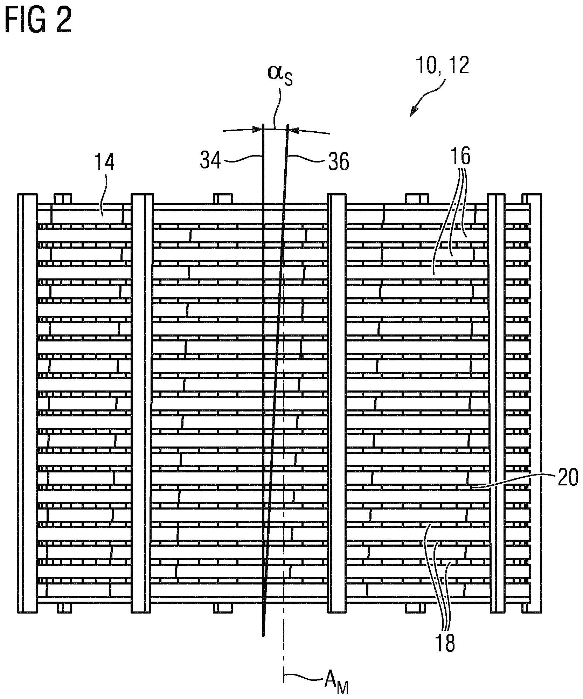

Die Figuren 1 und 2 zeigen ein Blechpaket 10, dass in einem Gehäuse angeordnet als Stator 12 einer elektrischen Maschine fungieren kann. Weder Gehäuse noch elektrische Maschine sind vorliegend dargestellt. Die Figur 1 zeigt eine perspektivische Ansicht und Figur 2 zeigt eine Draufsicht des Blechpakets 10.

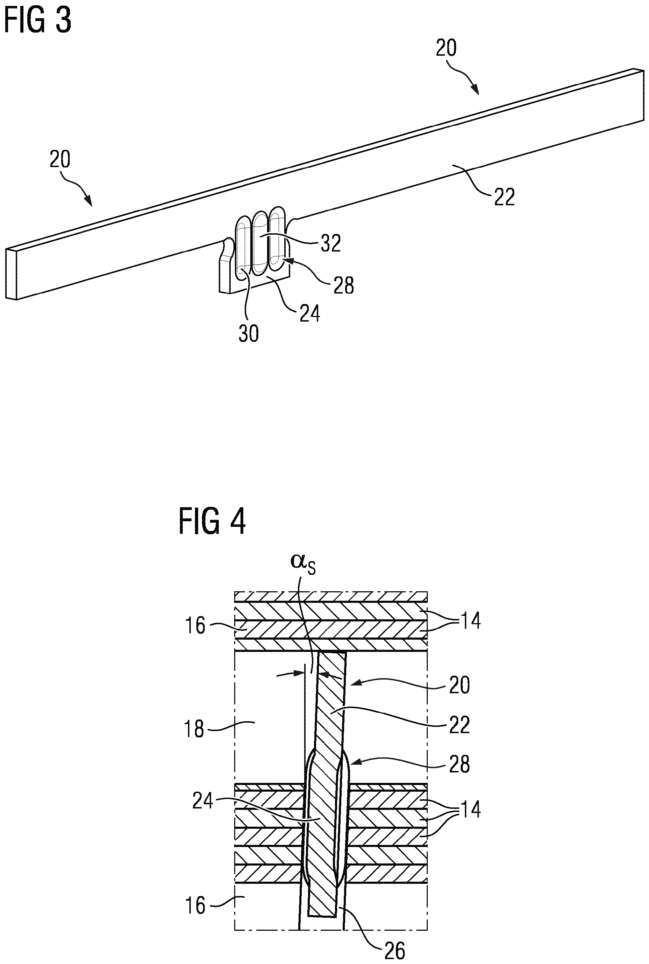

Das Blechpaket 10 ist zentrisch um eine Mittelachse A_{M} angeordnet und ist aus mehreren Einzelblechen 14 zu Teilpaketen 16 zusammengesetzt. Benachbarte Teilpakete 16 bilden untereinander einen sich in axialer Richtung ausdehnenden Axialspalt 18 aus. In den Axialspalten 18 sitzen mehrere Druckfinger 20 ein. Die mehrere Druckfinger 20 sind in den Axialspalten 18 umfänglich gleichmäßig verteilt angeordnet und jeder Druckfinger 20 ist in radialer Richtung ausgerichtet. Die Druckfinger 20 werden im weiteren Verlauf detailliert zu den Figuren 3 und 4 beschrieben.

Die Einzelbleche 14 sind umfänglich zueinander derart angeordnet, dass sich für das Blechpaket 10 ein Schrägungswinkel α_{S} ergibt. Der Schrägungswinkel α_{S} ist dadurch gebildet, dass jedes Einzelblech 14 zu dem jeweils in einer axialen Richtung der Mittelachse A_{M} benachbarten Einzelblech 14 einen umfänglichen Versatz, d.h. einen Verdrehwinkel oder Schrägungswinkel, aufweist. Der Betrag dieses Versatzes ist immer gleich, so dass sich über die axiale Länge des Blechpakets 10 aufsummiert und eine Verdrehung des Blechpakets 10 ergibt.

Der Schrägungswinkel α_{S} ist in der Figur 2 einskizziert. Mit dem Bezugszeichen 34 ist eine zu der Mittelachse A_{M} parallele Linie bezeichnet, die sich beim Verbinden identischer Umfangspunkte aller Einzelbleche 14 ergäbe, wenn diese ohne einen axialen Versatz zueinander ausgerichtet sind. Mit dem Bezugszeichen 36 ist demgegenüber die Linie bezeichnet, die sich beim Verbinden identischer Umfangspunkte aller Einzelbleche 14 ergibt, wenn diese einen fortlaufenden umfänglichen Versatz zueinander haben. Der Winkel zwischen den beiden Linie 34 und 36 ist der Schrägungswinkel α_{S} des Blechpakets 10.

Die Figur 3 zeigt einen Druckfinger 20 als Einzelheit. Der Druckfinger 20 bildet einen Radialabschnitt 22 und einen zu diesem orthogonal abstehenden Steckzapfen 24 aus. Der Radialabschnitt 22 ist in eingebautem Zustand des Druckfinger 20 in radialer Richtung bezogen auf die Mittelachse A_{M} ausgerichtet, wohingegen der Steckzapfen 24 ist axialer Richtung bezogen auf die Mittelachse A_{M} ausgerichtet ist. Der Steckzapfen 24 weist eine eingeprägte Oberflächenstruktur 28 auf, die sich vorliegend bis in den Radialabschnitt 22 erstreckt. Die Oberflächenstruktur 28 weist beispielsweise eine Abfolge von Sicken 30 und Stegen 32 aus, wobei vorliegend sich die Oberflächenstruktur 28 auf der einen Seite des Steckzapfens 24 als Steg 32 erhebt und dieser Steg 32 auf der anderen Seite des Steckzapfens 24 als Sicke 30 eingeprägt ist.

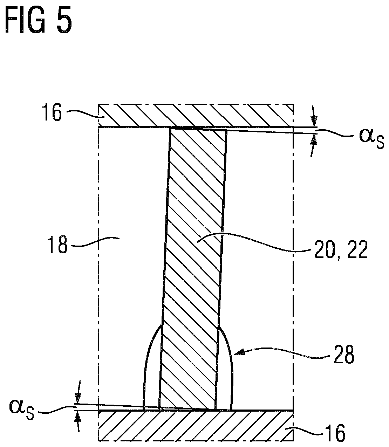

Die Figur 4 zeigt eine Darstellung von zwei benachbarten Teilpaketen 16 des Blechpakets, einen Axialspalt 18 zwischen den Teilpaketen 16 und einen in dem Axialspalt 18 einsitzenden Druckfinger 20. Die Darstellung der Figur 4 zeigt einen tangentialen Schnitt durch das Blechpaket 10 und durch den Steckzapfen 24 des Druckfingers 20, so dass in die Zeichenebene eine radiale Richtung zeigt. Zur Verdeutlichung ist in der Figur 4 noch ein herkömmlicher Druckfinger 20 gezeigt. Der Radialabschnitt 22 des Druckfingers 20 ist zwischen den Teilpaketen 16 in dem Axialspalt 18 positioniert und liegt an den Teilpaketen 16 bzw. an dem entsprechenden Einzelblech 14 an. Das unten dargestellte Teilpaket 16 bildet eine Stecknut 26 zur Aufnahme des Steckzapfens 24 des Druckfingers 20 aus. Wie bereits zuvor beschrieben, sind die Einzelbleche 14 umfänglich zueinander derart angeordnet, dass sich der Schrägungswinkel α_{S} ergibt. Die Anordnung hat zur Folge, dass sich der Schrägungswinkel α_{S} auch in der Ausrichtung der Stecknut 26 abbildet und zwar dahingehend, dass eine Achse der Stecknut 26 unter dem Schrägungswinkel α_{S} zu der Oberfläche der Einzelbleche 14 steht. Folglich sitzt auch der Druckfinger 20 über den Steckzapfen 24 unter dem Schrägungswinkel α_{S} in der Stecknut 26 ein. Der Druckfinger 20 ist also einen gewissen Winkel in Umfangsrichtung gekippt. Dies wiederum führt dazu, dass der Radialabschnitt 22 des Druckfingers 20 zu den entsprechenden Einzelblechen 14 der Teilpakete 16 ebenfalls eine winklige Positionierung hat und nicht plan anliegt. Dies gilt, wie bereits erläutert, für einen herkömmlichen Druckfinger 20 und ist in der weiteren Detaillierung der Figur 5 dargestellt.

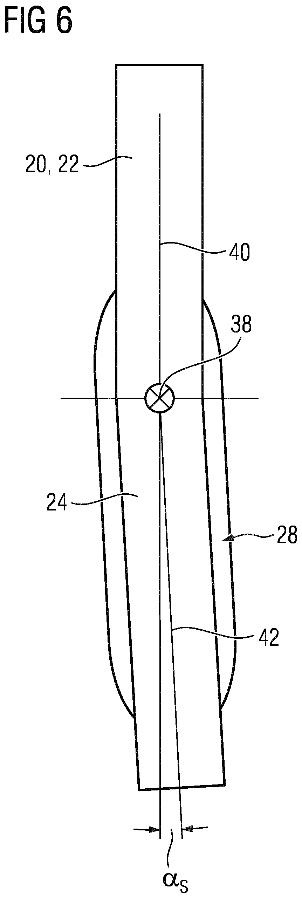

Die Figur 6 zeigt eine mögliche Ausführung eines erfindungsgemäßen Druckfingers 20 in einzelner Darstellung. Die Figur 6 zeigt bzgl. der Richtungen die gleiche Ansicht wie die Figuren 4 und 5. Der Druckfinger 30 ist in seinem strukturellen Aufbau grundsätzlich unverändert, allerdings ist der Steckzapfen 24 gegenüber dem Radialabschnitt 22 um eine durch die radiale Richtung beschriebene Achse 38 abgewinkelt. Dies führt dazu, dass die Radialebene 40 des Radialabschnitts 22 und die Radialebene 42 des Steckzapfens 24 sich in der Achse 38 schneiden und dort unter einem Winkel zueinander stehen, wobei es sich hierbei um den Schrägungswinkel αS handeln kann. Strukturell kann es ausreichend sein, wenn der Steckzapfen 24 gegenüber dem Radialabschnitt 22 um ein Maß abgewinkelt ist, das in seiner Größenordnung dem Maß des Schrägungswinkels α_{S} entspricht. Hierbei kann das Maß, um das der Steckzapfen 24 gegenüber dem Radialabschnitt 22 abgewinkelt ist, um +/- 0,2° von dem Maß des Schrägungswinkels α_{S} abweichen.

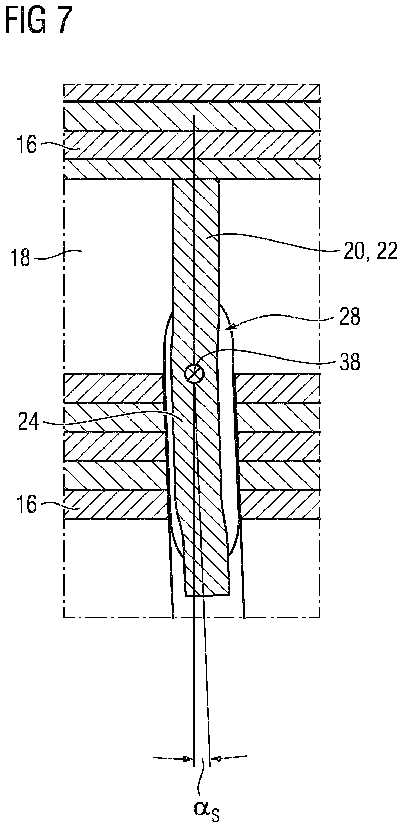

Die Figur 7 zeigt eine Darstellung, in der der Druckfinger 20, wie in der Figur 6 beschrieben, in dem Axialspalt 18 zwischen zwei benachbarten Teilpaketen 16 des Blechpakets 10 einsitzt. Zu erkennen ist, dass der Radialabschnitt 22 des Druckfingers 20 an den entsprechenden Einzelblechen 14 der Teilpakete 16 nunmehr plan anliegt und nicht mehr unter einem Winkel angestellt ist, wie dies bzgl. eines herkömmlichen Druckfingers zu der Figur 5 beschrieben wurde. Durch eine derartige Ausgestaltung des Druckfingers 20 ist eine saubere, plane Auflage an dem jeweiligen Blechpaket 10 bzw. Einzelpaket 20 gewährleistet. Ein Verkippen des Druckfingers 20 wird wirksam verhindert bzw. zumindest auf ein Minimum reduziert. Durch die plane Anlage Druckfinger 20 an der Blechoberfläche wir eine plastische Verformung Kontaktflächen des Druckfingers 20 während der Montage und während des Betriebs verhindert, so dass ein Lockern der Druckfinger 20 verhindert wird. Zudem werden Torsionsrückstellkräfte minimiert, so dass im Betrieb ein weiteres Verdrehen des Blechpakets 10 über den Schrägungswinkel α_{S} hinaus unterbunden wird.

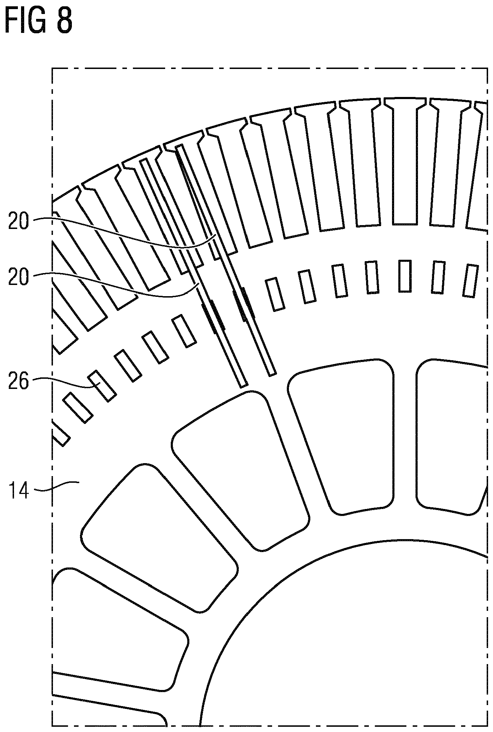

Die Figur 8 zeigt ausschnittsweise eine Draufsicht auf ein Einzelblech 14 mit exemplarisch zwei eingesteckten Druckfingern 20. Von den Druckfingern 20 ist der links dargestellte vollständig radial ausgerichtet und der rechts dargestellte in der Axialebene um einen gewissen Winkel in der Stecknut 26 rotiert. Das Einsteckspiel, mit dem der Steckzapfen 24 des Druckfingern 20 in der Stecknut 26 einsitzt, ist vorliegend derart bemessen, dass die mögliche Rotation des Druckfingers 20 - infolge des Einsteckspiels - das keine Kollision zu einem benachbarten Druckfingers auftreten kann.

### Bezugszeichenliste

- 10: Blechpaket
- 12: Stator
- 14: Einzelblech
- 16: Teilpakete
- 18: Axialspalt
- 20: Druckfinger
- 22: Radialabschnitt
- 24: Steckzapfen
- 26: Stecknut
- 28: Oberflächenstruktur
- 30: Sicke
- 32: Steg
- 34: Linie
- 36: Linie
- 38: Achse
- 40: Radialebene
- 42: Radialebene

## Patentansprüche

1. Blechpaket (10) für einen um eine Mittelachse A_{M} angeordneten Stator (12) oder einen um die Mittelachse (A_{M}) drehbaren Rotorläufer einer elektrischen Maschine,
wobei mehrere zu Teilpaketen (16) zusammengesetzte Einzelbleche (14) vorgesehen sind und jedes Einzelblech (14) zur Bildung eines Schrägungswinkels (α_{S}) des Blechpakets (10) zu dem jeweils in einer axialen Richtung der Mittelachse (A_{M}) benachbarten Einzelblech (14) einen umfänglichen Versatz aufweist und die Teilpakete (16) unter Bildung eines in der axialen Richtung sich ausdehnenden Axialspalts (18) zueinander ausgerichtet sind und
wobei zwischen Teilpaketen (16) umfänglich mehrere Druckfinger (20) einsitzen, die einen in einer radialen Richtung der Mittelachse (A_{M}) verlaufenden Radialabschnitt (22) und einen in der axialen Richtung gerichteten und in einer von den Einzelblechen (14) ausgebildeten Stecknut (26) einsitzenden Steckzapfen (24) aufweisen,
**dadurch gekennzeichnet, dass** der Steckzapfen (24) gegenüber dem Radialabschnitt (22) um eine durch die radiale Richtung beschriebene Achse abgewinkelt ist.

2. Blechpaket (10) nach Anspruch 1, **dadurch gekennzeichnet, dass** der Steckzapfen (24) gegenüber dem Radialabschnitt (22) um ein Maß abgewinkelt ist, das in seiner Größenordnung dem Maß des Schrägungswinkels (α_{S}) entspricht.

3. Blechpaket (10) nach Anspruch 1 oder 2, **dadurch gekennzeichnet, dass** das Maß, um das der Steckzapfen (24) gegenüber dem Radialabschnitt (22) abgewinkelt ist, um +/-0,2° von dem Maß des Schrägungswinkels (α_{S}) abweicht.

4. Blechpaket (10) nach einem der Ansprüche 1 bis 3, **dadurch gekennzeichnet, dass** der Steckzapfen (24) gegenüber dem Radialabschnitt (22) um ein Maß zwischen 1,8° und 2,2°, bevorzugt zwischen 1,9° und 2,1°, abgewinkelt ist.

5. Blechpaket (10) nach einem der Ansprüche 1 bis 4, **dadurch gekennzeichnet, dass** der Steckzapfen (24) eine eingeprägte Oberflächenstruktur (28) aufweist.

6. Blechpaket (10) nach Anspruch 5, **dadurch gekennzeichnet, dass** sich die Oberflächenstruktur (28) bis in den Radialabschnitt (22) erstreckt.

7. Blechpaket (10) nach Anspruch 5 oder 6, **dadurch gekennzeichnet, dass** die Oberflächenstruktur (28) zumindest eine auf der einen axialen Seite eingeprägte Sicke (30) als auf der anderen Seite hervortretenden Steg (32) aufweist.

8. Blechpaket (10) nach einem der Ansprüche 1 bis 7, **dadurch gekennzeichnet, dass** die Steckzapfen (24) mit einem Einsteckspiel, das eine definierte umfängliche Bewegung des Druckfingers (20) gegenüber dem jeweiligen Einzelblech (14) ermöglicht, in der Stecknut (26) einsitzen.

9. Stator und/oder Rotorläufer für eine elektrische Maschine, wobei Stator und/oder Rotorläufer ein Blechpaket (10) nach einem der vorangegangenen Ansprüche aufweist.

10. Elektrische Maschine, umfassend einen Stator (12) und/oder Rotorläufer nach Anspruch 9.
